# EUROPEAN PATENT APPLICATION

(11) **EP 4 408 085 A1**
(43) Date of publication of application: **31.07.2024**
(21) Application number: 22882720.0
(22) Date of filing: 12.10.2022
(51) Int. Cl.: H04W 56/00

(54) **UPLINK SYNCHRONIZATION ADJUSTMENT METHOD, AND RELATED DEVICE AND SYSTEM**

(30) Priority: 21.10.2021 CN 202111230898
(71) Applicant: Huawei Technologies Co., Ltd., Shenzhen, Guangdong 518129 (CN)
(72) Inventor: XU, Bin, Shenzhen, Guangdong 518129 (CN); LI, Bingzhao, Shenzhen, Guangdong 518129 (CN)
(74) Representative: Pfenning, Meinig & Partner mbB
(86) International application number: PCT/CN2022/124887
(87) International publication number: WO 2023/066110

(57) **Abstract**

Embodiments of this application disclose an uplink synchronization adjustment method, a related device, and a system. The method may include: A terminal device determines a timing advance TA, and reports the TA to an access network device; and the access network device completes uplink synchronization adjustment after receiving the TA. A trigger condition may be defined for TA reporting of the terminal device, or a resource to be used for TA reporting may be configured, or behavior changes of the terminal device and the access network device after the TA is reported may be set. In embodiments of this application, the terminal device determines and reports the TA. This resolves a conventional-technology problem that the TA is inaccurate because the access network device determines and adjusts the TA but the access network device cannot learn of a transmission delay in time in a fast moving scenario, and consequently an exception occurs in scheduling performed by the access network device on the terminal device, and improves scheduling efficiency of the access network device.

## Description

This application claims priority to Chinese Patent Application No. 202111230898.8, filed with the China National Intellectual Property Administration on October 21, 2021 and entitled "UPLINK SYNCHRONIZATION ADJUSTMENT METHOD, RELATED DEVICE, AND SYSTEM", which is incorporated herein by reference in its entirety.

### TECHNICAL FIELD

This application relates to the field of communication technologies, and in particular, to an uplink synchronization adjustment method, a related device, and a system.

### BACKGROUND

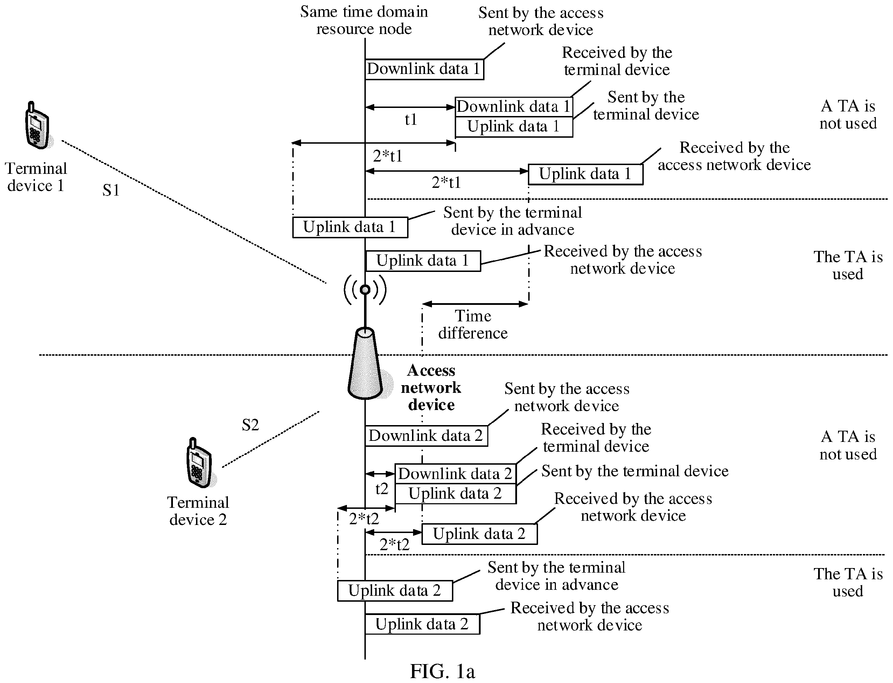

With development of the mobile internet, electronic devices such as terminals are widely applied, and more terminal devices need to be scheduled in a cell configured by an access network device. Different terminal devices access a network in a time-frequency orthogonal multiple access (Orthogonal Multiple Access) manner. Therefore, uplink transmission of different terminal devices in a same cell does not interfere with each other. However, because different terminals have different distances from the access network device, uplink information sent by the different terminal devices arrives at the access network device at different moments, causing intra-cell interference, and causing a failure of the access network device in scheduling the terminal devices. Therefore, the access network device expects that times at which uplink information of different terminal devices from a same subframe arrives at the access network device are aligned, and a timing advance (Timing Advance, TA) emerges. FIG. 1a is a schematic diagram of application of a timing advance in the conventional technology. After the TA is used for compensation, times at which uplink information sent by terminal devices at different positions in a cell on a same time domain resource arrives at an access network device may be aligned (as shown in FIG. 1a, after the TA is used, times at which uplink data 1 and uplink data 2 arrive at the access network device are aligned). In this way, it can be ensured that the access network device processes all terminal devices in a same cell based on one time. A value of the TA is equal to twice a unidirectional transmission delay, namely, a round trip delay (Round Trip Delay, RTD).

However, in a process of performing communication transmission by using the timing advance in the conventional technology, the access network device still cannot learn of transmission delays of the terminal devices in real time, causing a failure of the access network device in scheduling. For example, in a fast moving scenario, because the access network device or the terminal device moves quickly, a transmission delay between the terminal device and the access network device may change very quickly. In this case, it is very likely that the access network device cannot learn of the transmission delay of the terminal device in real time. Therefore, how to provide a method that can ensure that the access network device can learn of the transmission delay of the terminal device in time to improve scheduling efficiency is an urgent problem to be resolved.

### SUMMARY

Embodiments of this application provide an uplink synchronization adjustment method, a related device, and a system, to improve scheduling efficiency.

According to a first aspect, an embodiment of this application provides an uplink synchronization adjustment method, where the method may include:
a terminal device determines a first timing advance TA, where the first TA is used to perform uplink synchronization on the terminal device and an access network device; and
the terminal device sends a first message to the access network device, where the first message includes the first TA.

In this embodiment of this application, the terminal device determines and reports the timing advance TA, to ensure that the access network device can learn of a transmission delay of the terminal device in time, so as to improve scheduling efficiency. In the conventional technology, a timing advance TA for uplink synchronization is determined and adjusted by an access network. In a fast moving scenario (for example, a high-speed railway scenario and a non-terrestrial network scenario), because movement of a terminal device is random, the access network device needs to first parse uplink information sent by the terminal device to learn of a position of the terminal device. Consequently, the access network may fail to learn of a transmission delay of the terminal device in time, and a scheduling problem occurs. For the terminal device, a position of the access network device is usually known. For example, in a scenario of a high-speed railway or a bullet train in which the terminal device moves quickly, the access network device is usually fixed, that is, known. For another example, in a scenario of a non-terrestrial network in which a satellite (the access network device) moves quickly, even if the satellite moves quickly, the satellite runs based on a specific trajectory, and therefore a position of the satellite is still known. In this way, the terminal device can directly determine a timing advance TA (different from the conventional technology in which the access network device needs to first parse the uplink information to determine the TA) when learning of position information of the terminal device, and report the TA to the access network device in time. This can ensure that the access network device schedules the terminal device based on a correct TA, and improves scheduling efficiency.

In a possible implementation, that the terminal device sends a first message to the access network device includes:
when a difference between the first TA and a second TA is greater than or equal to a preset threshold, the terminal device sends the first message to the access network device, where the second TA is a TA that is last exchanged between the terminal device and the access network device or a TA that is last used by the terminal device.

In this embodiment of this application, when a preset condition is met, the terminal device reports a determined TA to the access network device. Specifically, a threshold (namely, the preset threshold) is first preset. When a difference between a TA (namely, the first TA) determined by the terminal device and a TA that is last exchanged between the terminal device and the access network device or a TA that is last used by the terminal device (namely, the second TA) is greater than or equal to the preset threshold, the terminal device reports the determined TA to the access network device. In this embodiment of this application, the threshold is preset, so that when out-of-synchronization of the terminal device does not occur, the TA is adjusted in time. In this way, uplink out-of-synchronization of the terminal device can be avoided.

In a possible implementation, the method further includes:
the terminal device receives a second message sent by the access network device, where the second message indicates the terminal device to enable a function of sending the first message to the access network device.

In this embodiment of this application, whether the terminal device determines and reports the TA may be controlled by the access network device by using sent indication information (namely, the second message). When the access network sends the indication information to indicate the terminal device to enable the function of sending the first message to the access network device, the terminal device determines and reports the TA based on the indication. Otherwise, the terminal device does not determine and report the TA. This reduces complexity of the terminal device, reduces signaling exchange, and saves power of the terminal device.

In a possible implementation, that the terminal device sends a first message to the access network device includes:
when an available first physical uplink shared channel PUSCH resource exists in the terminal device, the terminal device sends the first message to the access network device by using the first PUSCH resource; or
when no available first physical uplink shared channel PUSCH resource exists in the terminal device, the terminal device triggers a scheduling request SR, and sends the SR to request, from the access network device, a second PUSCH resource used to send the first message to the access network device.

In this embodiment of this application, the terminal device sends the first message to the access network device by using a currently available PUSCH resource or by using an available PUSCH resource obtained based on the scheduling request SR, to complete reporting of the TA. This improves scheduling efficiency, fully utilizes an existing resource, and avoids a resource waste.

In a possible implementation, that the terminal device sends a first message to the access network device includes:
when an uplink synchronous timer TAT of the terminal device is in a timeout state, the terminal device sends the first message to the access network device by using the first PUSCH resource or the second PUSCH resource.

In this embodiment of this application, when the TAT of the terminal device is in the timeout state, the terminal device still sends the first message to the access network device by using the currently available PUSCH resource or by using the available PUSCH resource obtained based on the scheduling request SR. This is different from the conventional technology in which when the TAT times out, a previously configured uplink resource is directly released, and uplink synchronization is completed through random access. In this way, a problem of an excessively long delay and poor user experience caused by random access can be avoided.

In a possible implementation, the method further includes:
after the terminal device sends the first message, if the terminal device does not receive an acknowledgment message for the first message from the access network device in a first preset time, the terminal device resends the first message or sets the uplink synchronous timer TAT to the timeout state.

In this embodiment of this application, a mechanism for acknowledging, by the access network device, the TA reported by the terminal device is introduced. If the terminal device still does not receive an acknowledgment from the access network device after reporting the TA by using the first message for a period of time, the terminal device may report the TA again, or set the TAT to be timeout, and then complete uplink synchronization in a random access manner. In this embodiment of this application, an acknowledgment mechanism of the access network device is used to ensure normal application of uplink synchronization.

In a possible implementation, the method further includes:
the terminal device performs a preset operation after a second preset time since the uplink synchronous timer TAT of the terminal device enters the timeout state, where the preset operation includes one or more of clearing a hybrid automatic repeat request HARQ buffer of the terminal device, releasing a physical uplink control channel PUCCH resource of the terminal device, releasing a sounding reference signal SRS resource of the terminal device, clearing a configured grant of the terminal device, clearing a PUSCH resource that is of the terminal device and that is used to report semi-persistent CSI, and maintaining a TA parameter.

In this embodiment of this application, after a period of time since the TAT of the terminal device enters the timeout state, the terminal device releases the resource previously configured by the access network device, to avoid a resource waste caused because the terminal device in an out-of-synchronization state cannot use the previously configured resource but still occupies the resource.

In a possible implementation, the method further includes:
after the terminal device sends the first message, the terminal device starts or restarts the uplink synchronous timer TAT; or
after the terminal device sends the first message, the terminal device starts or restarts the uplink synchronous timer TAT after a third preset time.

In this embodiment of this application, after the terminal device reports the TA by using the first message, or after the terminal device reports the TA for a period of time, the terminal device starts or restarts the uplink synchronous timer TAT. Duration of the TAT may be used as a validity period of the TA, to ensure that the terminal device and the access network device can perform adjustment in time after out-of-synchronization. In addition, the duration of the TAT or the third preset time is set, so that times at which TATs of the terminal device and the access network device reach the timeout state can be aligned, to avoid a scheduling conflict.

According to a second aspect, an embodiment of this application provides an uplink synchronization adjustment method, where the method may include:
an access network device receives a first message sent by a terminal device, where the first message includes a first timing advance TA, and the first TA is used to perform uplink synchronization on the terminal device and the access network device; and
the access network device communicates with the terminal device based on the first TA.

In this embodiment of this application, the access network device receives the timing advance TA determined and reported by the terminal device, so that a transmission delay of the terminal device can be learned of in time, and scheduling efficiency is improved. In the conventional technology, a timing advance TA for uplink synchronization is determined and adjusted by an access network. In a fast moving scenario (for example, a high-speed railway scenario and a non-terrestrial network scenario), because movement of a terminal device is random, the access network device needs to first parse uplink information sent by the terminal device to learn of a position of the terminal device. Consequently, the access network may fail to learn of a transmission delay of the terminal device in time, and a scheduling problem occurs. For the terminal device, in a scenario of a high-speed railway or a bullet train in which the terminal device moves quickly, the access network device is usually fixed, that is, known; or in a scenario of a non-terrestrial network in which a satellite (the access network device) moves quickly, even if the satellite moves quickly, the satellite runs based on a specific trajectory, and therefore a position of the satellite is known. In this way, the terminal device can directly determine a timing advance TA when learning of position information of the terminal device, and report the TA to the access network device in time. This can ensure that the access network device schedules the terminal device based on a correct TA, and improves scheduling efficiency.

In a possible implementation, the method further includes:
the access network device sends a second message to the terminal device, where the second message indicates the terminal device to enable a function of sending the first message to the access network device.

In a possible implementation, that an access network device receives a first message sent by a terminal device includes:
when an available first physical uplink shared channel PUSCH resource exists in the terminal device, the access network device receives the first message sent by the terminal device by using the first PUSCH resource; or
when no available first physical uplink shared channel PUSCH resource exists in the terminal device, the access network device receives a scheduling request SR sent by the terminal device, allocates a second PUSCH resource to the terminal device, and receives the first message sent by the terminal device by using the second PUSCH resource.

In a possible implementation, that an access network device receives a first message sent by a terminal device includes:
when an uplink synchronous timer TAT of the access network device is in a timeout state, the access network device receives the first message sent by the terminal device by using the first PUSCH resource or the second PUSCH resource.

In a possible implementation, the method further includes:
the access network device sends an acknowledgment message for the first message to the terminal device.

In a possible implementation, the method further includes:
the access network device performs a preset operation after a fourth preset time since the uplink synchronous timer TAT of the access network device enters the timeout state, where the preset operation includes one or more of clearing a currently configured hybrid automatic repeat request HARQ buffer, releasing a currently configured physical uplink control channel PUCCH resource, releasing a currently configured sounding reference signal SRS resource, clearing a currently configured grant, and clearing a currently configured PUSCH resource.

In a possible implementation, the method further includes:
after the access network device receives the first message sent by the terminal device, the access network device starts or restarts the uplink synchronous timer TAT; or
after the access network device receives the first message sent by the terminal device, the access network device starts or restarts the uplink synchronous timer TAT, and reduces duration of the TAT by a fifth preset time.

According to a third aspect, an embodiment of this application provides a terminal device, where the terminal device may include units and/or modules configured to perform the uplink synchronization adjustment method provided in any one or more possible implementations of the first aspect. Therefore, beneficial effects (or advantages) of the uplink synchronization adjustment method can also be implemented.

According to a fourth aspect, an embodiment of this application provides an access network device, where the access network device may include units and/or modules configured to perform the uplink synchronization adjustment method provided in any one or more possible implementations of the second aspect. Therefore, beneficial effects (or advantages) of the uplink synchronization adjustment method can also be implemented.

According to a fifth aspect, an embodiment of this application provides a communication apparatus. The communication apparatus includes a processor, and the processor is configured to support the communication apparatus in implementing a corresponding function in the uplink synchronization adjustment method provided in one or more of the first aspect and the second aspect. The communication apparatus may further include a memory. The memory is configured to couple to the processor, and stores program instructions and data that are necessary for the communication apparatus. The communication apparatus may further include a communication interface, which is used by the communication apparatus to communicate with another device or a communication network.

According to a sixth aspect, an embodiment of this application provides a communication system, including one or more terminal devices and one or more access network devices. The one or more terminal devices are communicatively connected to the one or more access network devices, the one or more terminal devices perform the method according to any one of the first aspect, and the one or more access network devices perform the method according to any one of the second aspect.

According to a seventh aspect, an embodiment of this application provides a computer-readable storage medium, configured to store computer software instructions used by a processor in a device apparatus for implementing the uplink synchronization adjustment method provided in one or more of the third aspect, the fourth aspect, and the fifth aspect. The computer software instruction includes a program designed for performing the foregoing aspects.

According to an eighth aspect, an embodiment of this application provides a chip system. The chip system includes a processor, configured to support a device in implementing a function in one or more of the first aspect and the second aspect, for example, generating or processing information in the uplink synchronization adjustment method. In a possible design, the chip system further includes a memory. The memory is configured to store program instructions and data that are required for the device. The chip system may include a chip, or may include a chip and another discrete component.

According to a ninth aspect, an embodiment of this application provides a computer program. The computer program includes instructions, and when the computer program is executed by a computer, the computer is enabled to perform a procedure performed by the processor in the communication apparatus in the fifth aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1a is a diagram of application of a timing advance in the conventional technology;
FIG. 1b is a schematic flowchart of an uplink synchronization adjustment method in the conventional technology;
FIG. 2 is a diagram of a system architecture of an uplink synchronization adjustment method according to an embodiment of this application;
FIG. 3a is a schematic flowchart of an uplink synchronization adjustment method according to an embodiment of this application;
FIG. 3b is a diagram of determining a TA by a terminal device according to an embodiment of this application;
FIG. 3c is a schematic flowchart of another uplink synchronization adjustment method according to an embodiment of this application;
FIG. 4a is a diagram of a time sequence of starting or restarting an uplink synchronous timer TAT according to an embodiment of this application;
FIG. 4b is another diagram of a time sequence of starting or restarting an uplink synchronous timer TAT according to an embodiment of this application;
FIG. 4c is still another diagram of a time sequence of starting or restarting an uplink synchronous timer TAT according to an embodiment of this application;
FIG. 5 is a diagram of a structure of a terminal device according to an embodiment of this application;
FIG. 6 is a diagram of a structure of an access network device according to an embodiment of this application; and
FIG. 7 is a diagram of a structure of a communication apparatus 700 according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth" and the like are intended to distinguish between different objects but do not indicate a particular sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or feature described with reference to the embodiment may be included in one or more embodiments of this application. The phrase shown in various positions in the specification may not necessarily refer to a same embodiment, and is not an independent or optional embodiment exclusive from another embodiment. It is explicitly and implicitly understood by persons skilled in the art that embodiments described in the specification may be combined with another embodiment.

Terminologies such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local process and/or a remote process and based on, for example, a signal having one or more data packets (for example, data from two components interacting with another component in a local system, a distributed system, and/or across a network such as the Internet interacting with another system by using the signal).

Some terms in this application are first described, to help persons skilled in the art have a better understanding.
(1) A timing advance (Timing Advance, TA) is essentially an offset between a downlink timing and an uplink timing of a terminal device. The terminal device sends uplink information to an access network device in advance based on a time corresponding to the timing advance. Offsets of terminal devices at different positions may be different. Therefore, times at which uplink information from different terminal devices arrives at the access network device may be controlled by using the TA. For example, for a terminal device that is far away from the access network device, because of a large transmission delay, an offset of the terminal device is greater than that of a terminal device that is close to the access network device. In other words, the terminal device sends uplink information to the access network device earlier, to ensure that terminal devices at different positions in a same cell send uplink information by using a same time domain resource, and moments at which the uplink information arrives at the access network device are aligned. Generally, the timing advance is twice the transmission delay, and is referred to as a round trip delay (Round Trip Delay, RTD) or a round trip time (Round Trip Time, RTT).
(2) Uplink synchronous timer (Time Alignment Timer, TAT): The access network device configures a timer (referred to as a time alignment timer at a MAC layer) for the terminal device by using RRC signaling, and then the terminal device determines, at the MAC layer by using the timer, whether to enter an uplink synchronization state. If the timer times out, uplink out-of-synchronization occurs. It should be noted that the access network device and the terminal device each maintain one uplink synchronous timer, and statuses of the two timers need to be consistent. Generally, duration of the timers maintained by the access network device and the terminal device is the same. In this embodiment, to ensure that the statuses of the two timers are consistent, the duration of the two timers may be different.
(3) A random access channel (Random Access CHannel) is a channel used in a process of establishing an RRC connection between the terminal device and the access network device. The terminal device can communicate with the access network device only after random access is completed. In addition, the terminal device may obtain an uplink grant and uplink synchronization from the access network device side through random access. When the terminal device and the access network device are in an uplink out-of-synchronization state, the terminal device may re-complete uplink synchronization with the access network device through random access.
(4) Uplink synchronization and out-of-synchronization: Generally, in a random access procedure or after the terminal device enters a connected mode, the access network device sends a TA configuration to the terminal device. After receiving the TA configuration, the terminal device is in an uplink synchronization state, and starts the TAT. Correspondingly, the access network device also starts the TAT, and TAT duration of the access network device and the terminal device is the same. In addition, in the RRC connected mode, the access network device may alternatively send a TA command to the terminal device, to maintain uplink synchronization. If the terminal device does not receive a TA command delivered by the access network device for a long time, until the TATs maintained by the access network device and the terminal device time out, the access network device and the terminal device are in the uplink out-of-synchronization state.

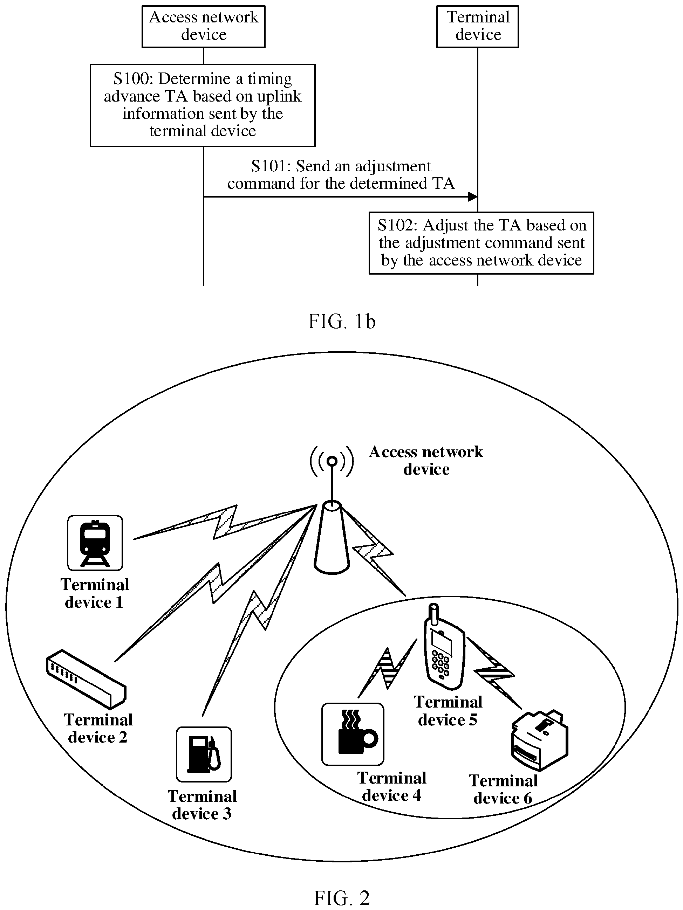

First, a technical problem to be specifically resolved in this application is analyzed and proposed. In the conventional technology, for an uplink synchronization adjustment solution, refer to FIG. 1b. FIG. 1b is a schematic flowchart of an uplink synchronization adjustment method in the conventional technology. The method includes the following steps.

Step S100: An access network device determines a timing advance TA based on uplink information sent by a terminal device.

Step S101: The access network device sends an adjustment command for the determined TA to the terminal device.

Step S102: The terminal device adjusts the TA based on the adjustment command sent by the access network device.

Based on the foregoing steps, the existing uplink synchronization adjustment solution has the following disadvantage.

Disadvantage 1: The access network device cannot learn of a transmission delay in time. In the conventional technology, a TA value for uplink synchronization is measured and adjusted by an access network, and this can basically meet a requirement of communication for uplink synchronization. However, in a scenario in which the terminal device or the access network device moves quickly, for example, in a scenario of a high-speed railway or a bullet train in which the terminal device moves quickly, or in a scenario of a non-terrestrial network in which a satellite (the access network device) moves quickly, the access network may fail to learn of a transmission delay of the terminal device in time. In other words, fast moving causes a large transmission delay change. In addition, the TA value is associated with the transmission delay. After the access network device calculates the TA value and sends an adjustment command, the TA value may change greatly due to fast moving. In this case, if the access network device continues to use the delayed TA value to schedule the terminal device, a scheduling problem is likely to occur.

To resolve a problem that the access network device cannot learn of the transmission delay of the terminal device in time in the current uplink synchronization adjustment method, so as to improve scheduling efficiency, this application comprehensively considers disadvantages in the conventional technology, and the following technical problems need to be resolved.

New calculation and adjustment mechanism (the disadvantage 1 of the solution 1) In the conventional technology, the timing advance TA for uplink synchronization is determined and adjusted by the access network. The access network may fail to learn of the transmission delay of the terminal device in time. Consequently, a scheduling problem occurs. In an actual communication transmission process, for the access network device, a moving trajectory of the terminal device is random, and for the terminal device, a position of the access network device is known. For example, in the scenario of the high-speed railway or the bullet train in which the terminal device moves quickly, the access network device is usually fixed. In a process in which the terminal device moves quickly, the terminal device may learn of a position of the terminal device in real time, and also know a position of the access network device. However, the access network device needs to first parse uplink information sent by the terminal device to learn of the position of the terminal device. For another example, in the scenario of the non-terrestrial network in which the satellite (the access network device) moves quickly, even if the satellite moves quickly, the satellite runs based on a specific trajectory. Therefore, for the terminal device, a position of the satellite is known (the satellite may deliver a trajectory schematic, for example, an ephemeris map, in a broadcast manner). However, because movement of the terminal device is random, the satellite needs to first parse uplink information sent by the terminal device to learn of a position of the terminal device. Therefore, for a fast moving scenario, a mechanism in which the terminal device determines and reports the TA may be introduced, to ensure that the access network device can learn of the transmission delay of the terminal device in time, so as to improve scheduling efficiency.

In conclusion, the existing uplink synchronization adjustment solution cannot meet a higher requirement for timeliness. Therefore, the uplink synchronization adjustment method provided in this application is used to resolve the foregoing technical problem.

To better understand the uplink synchronization adjustment method provided in embodiments of this application, the following describes a system architecture and/or an application scenario of the uplink synchronization adjustment method provided in embodiments of this application. It may be understood that scenarios described in embodiments of this application are intended to describe the technical solutions in embodiments of this application more clearly, and do not constitute a limitation on the technical solutions provided in embodiments of this application.

FIG. 2 is a diagram of a system architecture of the uplink synchronization adjustment method according to an embodiment of this application. The system architecture may include one or more terminal devices and one or more access network devices. The access network device and the terminal devices (UE 1 to UE 6) form a communication system. In the communication system, the UE 1 to the UE 6 may send uplink data to the access network device, and the access network sends downlink data to the UE 1 to the UE 6. In addition, the UE 4 to the UE 6 may also form a communication system. In the communication system, the access network device may send downlink information to the UE 1, the UE 2, the UE 5, and the like; the UE 5 may also send downlink information to the UE 4 and the UE 6; and the UE 4 and the UE 6 may further send uplink information to a base station through the UE 5.

The terminal device is an entity configured to receive or transmit a signal, and mainly implements a function of performing wireless communication with the base station. The terminal device may be an access terminal, a UE unit, a UE station, a mobile station, a remote station, a remote terminal, a mobile device, a UE terminal, a terminal, a wireless communication device, a multimedia device, a streaming media device, a UE agent, a UE apparatus, or the like. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device or a computing device having a wireless communication function or another processing device connected to a wireless modem, a vehicle-mounted device, a wearable device, a terminal in a future 5G network, a terminal in a future evolved public land mobile network (public land mobile network, PLMN), or the like.

The access network device is an entity configured to transmit or receive a signal on a network side, and mainly implements a function of communicating with a user terminal device and a core network device. The access network device may be a base station, a relay station, or an access point. The base station may be a base transceiver station (Base Transceiver Station, BTS) in a global system for mobile communications (Global system for mobile communications, GSM) or code division multiple access (Code Division Multiple Access, CDMA) network, or may be a NodeB (NodeB, NB) in wideband code division multiple access (Wideband Code Division Multiple Access, WCDMA), or may be an evolved (evolved) NB (eNB or eNodeB) in long term evolution (Long Term Evolution, LTE), or may be a radio controller in a cloud radio access network (Cloud Radio Access Network, CRAN) scenario, or may be a base station device in a future 5G network or an access network device in a future evolved PLMN network, or may be a wearable device, a vehicle-mounted device, or the like.

It should be noted that embodiments of this application may be applied to various communication systems, provided that in the communication system, an entity needs to send information, and another entity needs to receive the information. It may be understood that the architecture or the scenario of the communication system in FIG. 2 is merely an example implementation of embodiments of this application. An architecture or a scenario of the communication system in embodiments of this application includes but is not limited to the foregoing architecture or scenario of the communication system.

Based on the diagram of the system architecture of the uplink synchronization adjustment method provided in FIG. 2 and with reference to the uplink synchronization adjustment method provided in this application, the following analyzes in detail and resolves the technical problems proposed in this application.

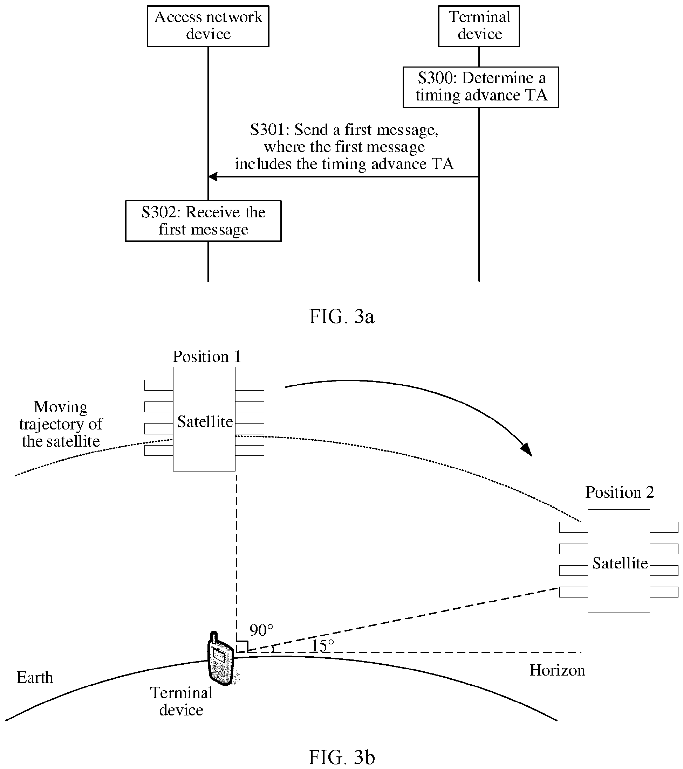

Refer to FIG. 3a. FIG. 3a is a schematic flowchart of an uplink synchronization adjustment method according to an embodiment of this application. The method may be applied to the access network device and the terminal device in FIG. 2. In other words, the access network device and the terminal device may be configured to support and perform step S300 to step S302 in the method procedure shown in FIG. 3a. With reference to FIG. 3a, the following describes the uplink synchronization adjustment method from interaction between the access network device and the terminal device. The method may include the following step S300 to step S302.

Step S300: The terminal device determines a timing advance TA.

Specifically, in a random access procedure or after the terminal device enters a connected mode, the terminal device may determine a timing advance TA (namely, a first timing advance TA) based on a position of the terminal device and a position of the access network. For example, the terminal device may learn of position information of the terminal device, and may also learn of position information of the access network device (or a satellite) based on indication information of the access network device, so as to determine a TAin real time based on the position information of the terminal device and the position information of the access network device (or the satellite). Specifically, a unidirectional transmission delay may be first determined based on a distance between the terminal device and the access network device and the speed of light, and then a timing advance TA is determined based on the unidirectional transmission delay. It should be noted that the first TA may be a complete TA (namely, an RTT from the terminal device to the access network device or an RTT/2) or a part of a complete TA (for example, in an NTN scenario, an RTT from the terminal device to a satellite or a high-altitude platform or an RTT/2). Generally, the TA is equal to twice the unidirectional transmission delay. A value of the first TA is not specifically limited herein.

Optionally, a time interval between current TA determining and previous TA determining by the terminal device may be fixed. In other words, the terminal device may periodically calculate a latest TA based on the position information of the terminal device and the position information of the access network device (or the satellite). A time periodicity may be configured by the access network, or may be determined by the terminal device based on a capability of the terminal device. Certainly, the time periodicity may be specified in a protocol in advance. This is not specifically limited herein.

Optionally, the time interval between current TA determining and previous TA determining by the terminal device may be not fixed. Instead, when to determine the TA may be determined based on a specific situation. For example, when the terminal device moves at a high speed, the time interval for determining the TA may be set to be short. On the contrary, when the terminal device moves at a low speed or is still, the time interval for determining the TA may be set to be long. For another example, refer to FIG. 3b. FIG. 3b is a diagram of determining the TA by the terminal device according to an embodiment of this application. When the satellite (the access network device) is close to and directly above the terminal device (that is, an included angle between a connection line between the satellite and the terminal device and a horizon is close to 90 degrees), the time interval for determining the TA may be short. However, when the satellite is far away from the terminal device (that is, the included angle between the connection line between the satellite and the terminal device and the horizon is close to 0 degrees), the time interval for determining the TAmay be long. Alternatively, the terminal device may determine the time interval based on the capability of the terminal device. Certainly, the time interval may be specified in a protocol in advance. Certainly, the terminal device may alternatively determine the TAin real time. This is not specifically limited herein.

Optionally, whether the terminal device determines and reports the TA may be controlled by the access network device by using sent indication information (namely, a second message). When the access network sends the indication information to indicate the terminal device to enable a function of sending the first message to the access network device, the terminal device determines and reports the TA based on the indication. Otherwise, the terminal device does not determine and report the TA. It should be noted that whether the terminal device supports TA determining and reporting depends on the capability of the terminal device. Before the access network device delivers the indication information, the terminal device may first report the capability of the terminal device to the access network device. If the terminal device is capable of determining and reporting the TA, the access network device sends the indication information to indicate the terminal device to report the TA. This reduces complexity of the terminal device, reduces signaling exchange, and saves power of the terminal device.

Step S301: The terminal device sends a first message to the access network device.

Specifically, the first message includes the timing advance TA, and is used to report the currently determined TA to the access network device. After determining the TA, the terminal device needs to report the TA to the access network device, so that the access network device can perform scheduling based on the TA.

Optionally, it may be set that the terminal device reports the determined TA to the access network device when a preset condition is met. For example, a threshold (namely, a preset threshold) may be preset. If a variation between the TA (namely, the first timing advance TA) currently determined by the terminal device and a TA that is last exchanged between the terminal device and the access network device or a TA that is last used by the terminal device (namely, a second TA) reaches the preset threshold, the terminal device is triggered to report the currently determined TA (namely, the first timing advance TA) to the access network device, to prevent the access network device from still scheduling the terminal device based on the TA that is last exchanged or used (namely, the second TA). The second TA may be the complete TA (namely, the RTT from the terminal device to the access network device or the RTT/2) or a part of the complete TA. Generally, the TA is equal to twice a unidirectional transmission delay. A value of the second TA is not specifically limited herein. The preset threshold may be configured by the access network device, or may be determined by the terminal device based on the capability of the terminal device. Certainly, the preset threshold may be specified in a protocol in advance. This is not specifically limited herein. It should be noted that the threshold is preset, so that when out-of-synchronization of the terminal device does not occur, the TA is adjusted in time. In this way, uplink out-of-synchronization of the terminal device can be avoided. In addition, to prevent the terminal device from frequently reporting the TA to the access network device, which causes a resource waste, a limitation condition may be further added. For example, the terminal device reports the TA after the variation reaches the preset threshold and this state lasts for a specific time. It should be further noted that, the TA that is last exchanged between the terminal device and the access network device or the TA that is last used by the terminal device may be a TAlast received from the access network device, or may be a TA on which uplink synchronization is last performed, or may be a currently maintained TA, or may be a TA used when uplink information is sent most recently.

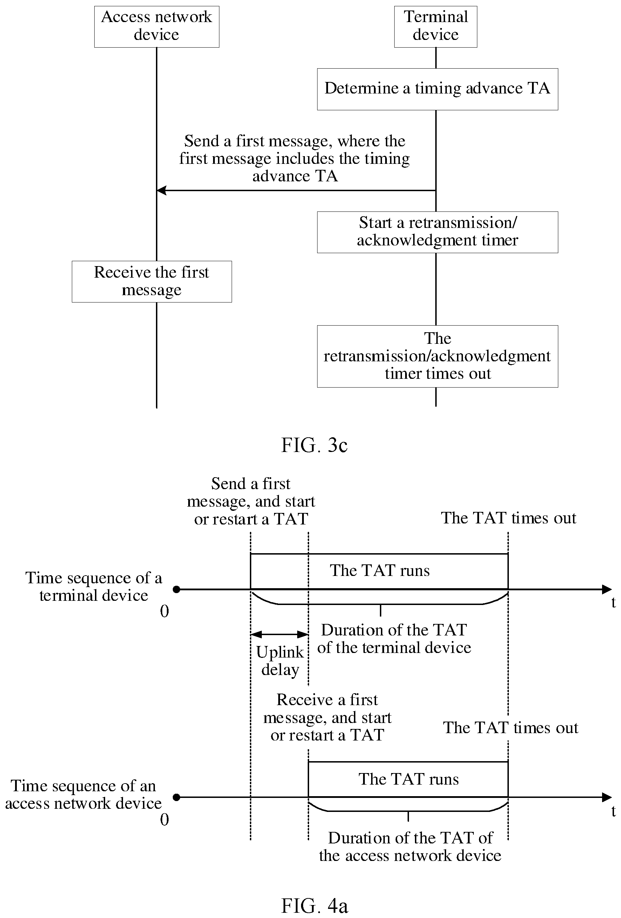

Optionally, if an uplink synchronous timer (TAT) of the terminal device does not time out when the terminal device reports the TA, the terminal device may first determine whether there is currently an available physical uplink shared channel PUSCH resource. If there is currently an available PUSCH resource, the terminal device sends the TA to the access network device by using the PUSCH resource. If there is currently no available PUSCH resource in the terminal device and the access network device configures a scheduling request (Scheduling Request, SR) resource for the terminal device, the terminal device may trigger an SR, and then request a PUSCH resource from the access network device by using the SR, to send the TA. If there is currently no available PUSCH resource and the access network device does not configure an available scheduling request (Scheduling Request, SR) resource for the terminal device, the terminal device may trigger a RACH process, and obtain an available uplink resource through a RACH to send the TA. The SR resource herein may be a dedicated SR resource (namely, a PUSCH resource used only to request to send a TA, or can be triggered only by TA reporting) or a general SR resource configured by the access network device for TA reporting. In addition, it should be noted that, if a difference between the TA currently determined by the terminal device and the TA that is last exchanged between the terminal device and the access network device or the TA that is last used by the terminal device is excessively large, the access network device may fail to receive the currently determined TA reported by the terminal device due to the excessively large TA deviation, but the terminal device cannot acknowledge whether the access network device receives a reporting message for the TA. Therefore, an acknowledgment mechanism may be introduced. To be specific, after receiving the reporting message for the TA, the access network device may send an acknowledgment message to the terminal device. If the terminal device receives the acknowledgment message, it is considered that the currently determined TA is successfully reported. Otherwise, the currently determined TA is not successfully reported. Specifically, refer to FIG. 3c. FIG. 3c is a schematic flowchart of another uplink synchronization adjustment method according to an embodiment of this application. After the terminal device reports the TA, the terminal device may start a retransmission timer (the timer may be configured by the access network device, or may be determined by the terminal device based on an implementation). If the terminal device still does not receive the acknowledgment message for the TA from the access network device when the retransmission timer times out, the terminal device may retransmit the TA (that is, retransmit the message). Alternatively, the terminal device may start an acknowledgment timer. If the terminal device does not receive the acknowledgment message for the TA from the access network device when the acknowledgment timer times out, the terminal device may consider that the terminal device is currently in an uplink out-of-synchronization state, then set the uplink synchronous timer TAT to a timeout state, and initiate random access through the RACH to re-perform uplink synchronization with the access network device. Certainly, if the terminal device receives the acknowledgment message from the access network device before the retransmission timer and the acknowledgment timer times out, it is considered that uplink synchronization is obtained, and the terminal device restarts the TAT. The acknowledgment message sent by the access network device for the TA may be an uplink scheduling grant (grant) scheduled by the access network device, an acknowledgment MAC CE (confirmation MAC CE) specially designed for TA reporting, or a TA command (TA command, TAC) sent by the access network device. This is not specifically limited herein. It should be further noted that, that there is no an available physical uplink shared channel PUSCH resource in the terminal device may be because the access network device does not allocate or configure an uplink PUSCH resource, or may be because the access network device allocates or configures an uplink PUSCH resource but the terminal device cannot use the uplink PUSCH resource for current transmission due to a rule limitation, or may be a combination of the two cases. This is not specifically limited herein.

Optionally, in an implementation, when the uplink synchronous timer (TAT) of the terminal device times out, an uplink resource (including one or more of a hybrid automatic repeat request HARQ buffer of the terminal device, a physical uplink control channel PUCCH resource of the terminal device, a sounding reference signal SRS resource of the terminal device, a configured grant of the terminal device, a PUSCH resource that is of the terminal device and that is used to report semi-persistent CSI, or a maintained TA parameter) is not released. If the terminal device needs to send uplink information after the TAT times out, for example, when TA reporting needs to be performed, the terminal device may first determine whether there is currently a physical uplink shared channel (Physical Uplink Shared Channel, PUSCH) resource (different from the conventional technology in which when the uplink synchronous timer times out, all previously configured uplink resources except the RACH resource are directly released), and adjust uplink sending based on the currently determined TA (namely, the first timing advance TA) (that is, perform delay compensation based on the TA when sending the uplink information). Specifically, if there is currently no available PUSCH resource, a configured physical uplink control channel (Physical Uplink Control Channel, PUCCH) resource is used to send the SR, to additionally request a physical uplink shared channel PUSCH resource to send the TA. If the SR resource is not configured, the RACH procedure is initiated. In the foregoing manner, because the terminal device may determine an accurate TA, even after the TAT times out, the terminal device does not perform a preset operation (including one or more of clearing a hybrid automatic repeat request HARQ buffer of the terminal device, releasing a physical uplink control channel PUCCH resource of the terminal device, releasing a sounding reference signal SRS resource of the terminal device, clearing a configured grant of the terminal device, clearing a PUSCH resource that is of the terminal device and that is used to report semi-persistent CSI, and maintaining a TA parameter). This can avoids a problem that an access delay is long because resource releasing is caused by performing the preset operation immediately after the TAT times out, and uplink synchronization can be implemented only through random access, and ensures user experience. Then, if the terminal device receives the acknowledgment message (same as above), it is considered that the uplink synchronization is obtained, and the TAT is restarted. If the terminal device does not receive the acknowledgment message, it is considered that uplink out-of-synchronization occurs. In this case, the terminal device releases the previously configured uplink resources (that is, performs the preset operation, including one or more of clearing the hybrid automatic repeat request HARQ buffer of the terminal device, releasing the physical uplink control channel PUCCH resource of the terminal device, releasing the sounding reference signal SRS resource of the terminal device, clearing the configured grant of the terminal device, clearing the PUSCH resource that is of the terminal device and that is used to report the semi-persistent CSI, and maintaining the TA parameter), performs synchronization with the access network device through the RACH, and restarts the TAT. It should be noted that whether the terminal device releases the previously configured uplink resource may be determined by the capability of the terminal device, and does not completely depend on a state of the TAT.

It should be noted that, when the TAT times out, and the terminal device does not release the uplink resources previously configured by the access network device, correspondingly, the access network device does not release the uplink resources previously configured for the terminal device, and continues to perform monitoring on the corresponding uplink resources. After receiving the currently determined TA sent by the terminal device, the access network device updates the TA to a TA to be maintained by the access network device, and considers that the terminal device is in the uplink synchronization state, and may further send the acknowledgment message for the TA to the terminal device. Then, the access network device may restart the TAT after a period of time.

It should be further noted that, if the terminal device does not report the TA after the TAT times out, the terminal device and the access network device may also release the previously configured uplink resources within a specific time. For example, a new timer may be introduced. When the TAT times out, the access network device and the terminal device start the timer. If the terminal device does not report a TA after the timer times out, both the access network device and the terminal device release the previously configured uplink resources. Finally, the terminal device synchronizes with the access network device through the RACH. Certainly, after the TAT times out, whether the terminal device releases the previously configured uplink resources may be controlled by the access network device by sending the indication information. For example, when the indication information sent by the access network device indicates the terminal device not to release the uplink resources, the UE does not release, according to the foregoing procedure after the TAT times out, the uplink resources previously configured by the access network device. In addition, whether the terminal device supports non-release depends on the capability of the terminal device. If the terminal device has a capability of supporting non-release, the terminal device may first report the capability to the access network device. After learning of the capability of the terminal device, the access network device sends the indication information, to indicate the terminal device not to release the previously configured uplink resources after the TAT times out. In addition, the uplink resources previously configured by the access network device may include one or more of the hybrid automatic repeat request (Hybrid Automatic Repeat reQuest, HARQ) buffer, the PUCCH resource, the sounding reference signal (Sounding Reference Signal, SRS) resource, the configured grant, the PUSCH resource, and the maintained TA parameter. This is not specifically limited herein.

Step S302: The access network device receives the first message sent by the terminal device.

Specifically, the access network device receives the TA reported by the terminal device by using the first message, so that the terminal device can be scheduled based on the TA.

Optionally, after receiving the TA reported by the terminal device by using the first message, the access network device may send the acknowledgment message for the TA to the terminal device, to ensure that the terminal device can acknowledge that uplink synchronization is obtained.

Optionally, after the terminal device reports the TA, the access network device and the terminal device may start or restart the uplink synchronous timer TAT at a specific moment. A start operation is for a scenario in which the current uplink synchronous timer is not started, and a restart operation is for a scenario in which the current uplink synchronous timer is already running (which may include a case in which the uplink synchronous timer times out and a case in which the uplink synchronous timer does not time out). It should be noted that, a moment at which the terminal device reports the TA, a moment at which the terminal device determines the TA, or a moment at which the access network device sends the indication message or the acknowledgment message may be used as a reference for starting or restarting the TAT. This is not specifically limited herein. Essentially, the reference is to ensure that times at which the TATs maintained by the access network device and the terminal device reach the timeout state are aligned, to avoid a case in which when the TAT of the access network device (or the terminal device) times out, the TAT of the terminal device (or the access network device) does not time out. The following uses an example in which the terminal device reports the TA to the access network device for description.

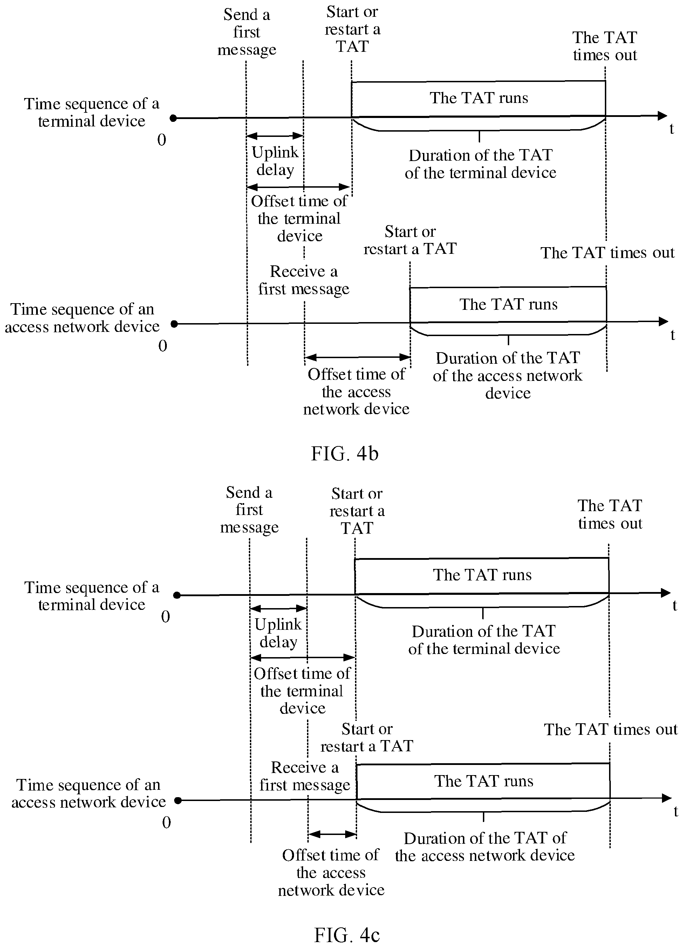

Specifically, when sending a reporting message (namely, the first message) for the TA to the access network device, the terminal device may immediately start or restart the uplink synchronous timer TAT maintained by the terminal device. FIG. 4a is a diagram of a time sequence of starting or restarting the uplink synchronous timer TAT according to an embodiment of this application. Alternatively, after the reporting message for the TA is sent to the access network device, the terminal device may start or restart the uplink synchronous timer TAT after a compensation offset time (for example, another timer may be designed, and duration of the timer is an offset, that is, a time from starting of the timer to timing out of the timer elapses the offset duration). FIG. 4b is a diagram of another time sequence of starting or restarting the uplink synchronous timer TAT according to an embodiment of this application. FIG. 4c is a diagram of still another time sequence of starting or restarting the uplink synchronous timer TAT according to an embodiment of this application. Duration of the TAT of the terminal device and the TAT of the access network device may be the same (as shown in FIG. 4c) or different (as shown in FIG. 4b). Duration of an offset of the terminal device and an offset of the access network device may be the same (as shown in FIG. 4b) or different (as shown in FIG. 4c). In addition, the offset of the terminal device may be the current unidirectional transmission delay (namely, TA/2) from the terminal device to the access network device or the satellite, or may be a bidirectional transmission delay (namely, TA), or may be a time estimated by the terminal device in advance based on a distance from the terminal device to the access network device or the satellite, or may be a time determined based on a pre-configuration of the access network device. This is not specifically limited herein.

In addition, the access network device may start or restart the uplink synchronous timer TAT when receiving the TA reported by the terminal device. Refer to FIG. 4a. Alternatively, after receiving the TA reported by the terminal device, the access network device may start or restart the uplink synchronous timer TAT after an offset time. Refer to FIG. 4b and FIG. 4c. In addition, the offset of the access network device may be the unidirectional transmission delay (namely, TA/2) from the terminal device to the access network device or the satellite, or may be the bidirectional transmission delay (namely, TA), or may be a time determined based on a pre-configuration of the access network device. It should be noted that the offset time that is set on the terminal device may be different from the offset time that is set on the access network device. When a transmission delay between the terminal device and the access network device is considered, the offset time of the terminal device may be a time that is one unidirectional transmission delay (namely, TA/2) longer than the offset time of the access network device (as shown in FIG. 4c). Certainly, the duration of the TAT of the terminal device may be set to a time that is one unidirectional transmission delay (namely, TA/2) longer than the duration of the TAT of the access network device, namely, a time (namely, a fifth preset time) obtained by reducing the duration of the TAT of the access network device by one unidirectional transmission delay (namely, TA/2). In this way, the times at which the uplink synchronous timers TAT of the access network device and the terminal device reach the timeout state can be aligned.

In addition, when the access network device sends the TA configuration or the TA command to the terminal device, the TAT timers maintained by the access network device and the terminal device need to be started or restarted. In this process, it also needs to be ensured that the TAT timers maintained by the access network device and the terminal device can synchronously reach the timeout state. For example, when timing duration of the TATs maintained by the access network device and the terminal device are the same, in an implementation, after sending the TA configuration or the TA command, the access network device immediately starts or restarts the TAT timer, and adds an offset time to the duration of the TAT timer. For example, the offset time may be a time of one unidirectional transmission delay (namely, TA/2). After the terminal device receives the TA configuration or the TA command after one unidirectional transmission delay (namely, TA/2), the terminal device immediately starts or restarts the TAT timer. In another implementation, after sending the TA configuration or the TA command, the access network device starts or restarts the TAT timer after one unidirectional transmission delay (namely, TA/2). After receiving the TA configuration or the TA command after one unidirectional transmission delay (namely, TA/2), the terminal device immediately starts or restarts the TAT timer. In this way, it can also be ensured that the two timers can time out at the same time. In another implementation, after sending the TA configuration or the TA command, the access network device immediately starts or restarts the TAT timer. After receiving the TA configuration or the TA command after one unidirectional transmission delay (namely, TA/2), the terminal device also immediately starts or restarts the TAT timer. However, an offset time is reduced from the duration of the TAT timer, for example, a time of one unidirectional transmission delay (namely, TA/2). In this way, it can be ensured that the two timers can time out at the same time. All these implementations can ensure that the two TAT timers can time out at the same time.

It should be further noted that, in the conventional technology, the uplink synchronous timer TAT is independently maintained by each TA group (Timing Advance Group, TAG, namely, a group of cells with a same TA). In other words, the uplink synchronous timer TAT is started or restarted by each TAG independently. However, in the solutions in embodiments of this application, because the TA is reported at a terminal device level, the reporting of the TA has same impact on all TAGs. Therefore, in embodiments of this application, an operation of starting or restarting the uplink synchronous timer TAT is unified for all TAGs. In other words, all TAGs simultaneously start or restart the uplink synchronous timer TAT. In other words, in embodiments of this application, TAs of a plurality of cells may be adjusted through calculation and reporting only once. Compared with a manner of independent maintenance in the conventional technology, signaling exchange is reduced, and a procedure is simpler.

It may be understood that when the TA changes greatly, the terminal device determines and reports the TA, so that uplink out-of-synchronization can be avoided. Therefore, determining and reporting the TA by the terminal device is also a manner of implementing uplink synchronization. When the foregoing embodiments are applied to an actual communication service, especially a service in a fast moving scenario, because the position of the access network device is known to the terminal device, the terminal device can directly determine and report the timing advance TA to the access network device by only learning of the position of the terminal device. This is different from a conventional-technology manner in which the access network device needs to parse uplink information of the terminal device to determine the TA. In this way, the access network device can learn of the transmission delay in time, and schedule the terminal device by using the correct TA. Therefore, in this application, the terminal device determines and reports the timing advance TA, to improve scheduling efficiency of the access network device.

The foregoing describes in detail the methods in embodiments of this application. The following provides two related devices in embodiments of this application.

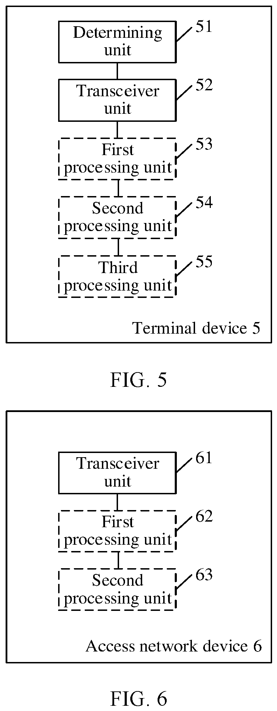

FIG. 5 is a diagram of a structure of a terminal device according to an embodiment of this application. The terminal device 5 may include a determining unit 51 and a transceiver unit 52. Optionally, the terminal device 5 may further include a first processing unit 53, a second processing unit 54, and a third processing unit 55. Detailed descriptions of the units are as follows:

In a design, the determining unit 51 is configured to determine a first timing advance TA, where the first TA is used to perform uplink synchronization on the terminal device and an access network device.

The transceiver unit 52 is configured to send a first message to the access network device, where the first message includes the first TA.

In a possible implementation, the transceiver unit 52 is specifically configured to:
when a difference between the first TA and a second TA is greater than or equal to a preset threshold, send the first message to the access network device, where the second TA is a TA that is last exchanged between the terminal device and the access network device or a TA that is last used by the terminal device.

In a possible implementation, the transceiver unit 52 is further configured to:
receive a second message sent by the access network device, where the second message indicates the terminal device to enable a function of sending the first message to the access network device.

In a possible implementation, the transceiver unit 52 is specifically configured to:
when an available first physical uplink shared channel PUSCH resource exists in the terminal device, send the first message to the access network device by using the first PUSCH resource; or
when no available first physical uplink shared channel PUSCH resource exists in the terminal device, trigger a scheduling request SR, and send the SR to request, from the access network device, a second PUSCH resource used to send the first message to the access network device.

In a possible implementation, the transceiver unit 52 is specifically configured to:
when an uplink synchronous timer TAT of the terminal device is in a timeout state, send the first message to the access network device by using the first PUSCH resource or the second PUSCH resource.

Optionally, the terminal device further includes a first processing unit 53, configured to: after the terminal device sends the first message, if the terminal device does not receive an acknowledgment message for the first message from the access network device in a first preset time, resend the first message or set the uplink synchronous timer TAT to the timeout state.

Optionally, the terminal device further includes a second processing unit 54, configured to perform a preset operation after a second preset time since the uplink synchronous timer TAT of the terminal device enters the timeout state, where the preset operation includes one or more of clearing a hybrid automatic repeat request HARQ buffer of the terminal device, releasing a physical uplink control channel PUCCH resource of the terminal device, releasing a sounding reference signal SRS resource of the terminal device, clearing a configured grant of the terminal device, clearing a PUSCH resource that is of the terminal device and that is used to report semi-persistent CSI, and maintaining a TA parameter.

Optionally, the terminal device further includes a third processing unit 55, configured to: after the terminal device sends the first message, start or restart the uplink synchronous timer TAT; or
after the terminal device sends the first message, start or restart the uplink synchronous timer TAT after a third preset time.

FIG. 6 is a diagram of a structure of an access network device according to an embodiment of this application. The access network device 6 may include a transceiver unit 61. Optionally, the access network device 6 may further include a first processing unit 62 and a second processing unit 63. Detailed descriptions of the units are as follows:

In a design, the transceiver unit 61 is configured to: receive a first message sent by a terminal device, where the first message includes a first timing advance TA, and the first TA is used to perform uplink synchronization on the terminal device and the access network device; and
communicate with the terminal device based on the first TA.

In a possible implementation, the transceiver unit 61 is further configured to send a second message to the terminal device, where the second message indicates the terminal device to enable a function of sending the first message to the access network device.

In a possible implementation, the transceiver unit 61 is specifically configured to:
when an available first physical uplink shared channel PUSCH resource exists in the terminal device, receive, by the access network device, the first message sent by the terminal device by using the first PUSCH resource; or
when no available first physical uplink shared channel PUSCH resource exists in the terminal device, receive, by the access network device, a scheduling request SR sent by the terminal device, allocate a second PUSCH resource to the terminal device, and receive the first message sent by the terminal device by using the second PUSCH resource.

In a possible implementation, the transceiver unit 61 is specifically configured to:
when an uplink synchronous timer TAT of the access network device is in a timeout state, receive the first message sent by the terminal device by using the first PUSCH resource or the second PUSCH resource.

In a possible implementation, the transceiver unit 61 is further configured to send an acknowledgment message for the first message to the terminal device.

Optionally, the access network device further includes a first processing unit 62, configured to perform a preset operation after a fourth preset time since the uplink synchronous timer TAT of the access network device enters the timeout state, where the preset operation includes one or more of clearing a currently configured hybrid automatic repeat request HARQ buffer, releasing a currently configured physical uplink control channel PUCCH resource, releasing a currently configured sounding reference signal SRS resource, clearing a currently configured grant, and clearing a currently configured PUSCH resource.

Optionally, the access network device further includes a second processing unit 63, configured to: after the access network device receives the first message sent by the terminal device, start or restart the uplink synchronous timer TAT; or
after the access network device receives the first message sent by the terminal device, start or restart the uplink synchronous timer TAT, and reduce duration of the TAT by a fifth preset time.

It should be noted that, for functions of the functional units in the terminal device 5 and the access network device 6 described in embodiments of this application, refer to related descriptions in the foregoing method embodiments. Details are not described herein again.

In a possible product form, the access network device or the terminal device in embodiments of this application may be implemented by using a general bus architecture.

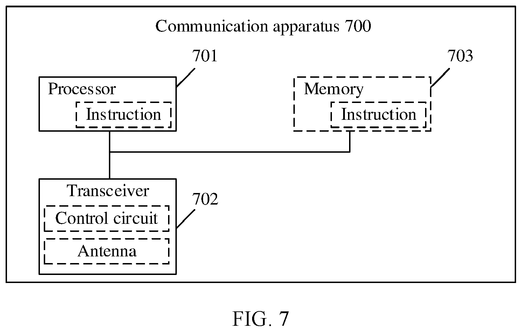

For ease of description, refer to FIG. 7. FIG. 7 is a diagram of a structure of a communication apparatus 700 according to an embodiment of this application. The communication apparatus 700 may be an access network device, a terminal device, or a chip in an access network device or a terminal device. FIG. 7 shows only main components of the communication apparatus 700. In addition to a processor 701 and a transceiver 702, the communication apparatus may further include a memory 703 and an input/output apparatus (not shown in the figure).

The processor 701 is mainly configured to: process a communication protocol and communication data, control the entire communication apparatus, execute a software program, and process data of the software program. The memory 703 is mainly configured to store the software program and data. The transceiver 702 may include a control circuit and an antenna. The control circuit is mainly configured to: perform a conversion between a baseband signal and a radio frequency signal, and process the radio frequency signal. The antenna is mainly configured to receive/send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 701 may read the software program in the memory 703, explain and execute instructions of the software program, and process data of the software program. When data needs to be sent wirelessly, the processor 701 performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 701. The processor 701 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 701, the transceiver 702, and the memory 703 may be connected through a communication bus.

In a design, the communication apparatus 700 may be configured to perform a function of the uplink synchronization adjustment method in the foregoing method embodiments. The processor 701 may be configured to generate various messages sent in the steps in FIG. 3a, and/or configured to perform another process of the technology described in this specification. The transceiver 702 may be configured to receive and send the messages in the steps in FIG. 3a, and/or configured to perform another process of the technology described in this specification.

In any one of the foregoing designs, the processor 701 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 701 may store instructions. The instructions may be a computer program. The computer program is run on the processor 701, so that the communication apparatus 700 performs the method described in any one of the foregoing method embodiments. The computer program may be fixed in the processor 701. In this case, the processor 701 may be implemented by hardware.

In an implementation, the communication apparatus 700 may include a circuit, and the circuit may implement the sending, receiving, or communication function in the foregoing method embodiments. The processor and the transceiver that are described in this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal-oxide-semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited in FIG. 7. The communication apparatus may be an independent device or may be a part of a large device. For example, the communication apparatus may be:
(1) an independent integrated circuit IC, a chip, or a chip system or subsystem;
(2) a set including one or more ICs, where the set of ICs may optionally include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device.

In a possible product form, the access network device or the terminal device in embodiments of this application may be implemented by using a general-purpose processor.

The general-purpose processor for implementing uplink synchronization adjustment includes a processing circuit and an input/output interface interconnected to and communicating with the processing circuit.

In a design, the general-purpose processor may be configured to perform a function of the uplink synchronization adjustment method in the foregoing method embodiments. The processing circuit may be configured to generate various messages sent in the steps in FIG. 3a, and/or configured to perform another process of the technology described in this specification. The input/output interface may be configured to receive and send the messages in the steps in FIG. 3a, and/or configured to perform another process of the technology described in this specification.

It should be understood that the communication apparatuses in various product forms have any function of adjusting uplink synchronization in the foregoing method embodiments, and details are not described herein again.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through a receive circuit, so that the apparatus performs the method in any one of the foregoing embodiments.

An embodiment of this application further provides a wireless communication system, including one or more of an access network device and a terminal device, and may perform the method in any one of the foregoing embodiments.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, persons skilled in the art should appreciate that this application is not limited to the described sequence of the actions, because according to this application, some steps may be performed in another sequence or simultaneously. It should be further appreciated by persons skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic or other forms.

The units described as separate components may or may not be physically separate, and components displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like, specifically, may be a processor in a computer device) to perform all or some of the steps of the methods described in embodiments of this application. The storage medium may include: any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An uplink synchronization adjustment method, comprising:
determining, by a terminal device, a first timing advance TA, wherein the first TA is used to perform uplink synchronization between the terminal device and an access network device; and
sending, by the terminal device, a first message to the access network device, wherein the first message comprises the first TA.

2. The method according to claim 1, wherein the sending, by the terminal device, a first message to the access network device comprises:
when a difference between the first TA and a second TA is greater than or equal to a preset threshold, sending, by the terminal device, the first message to the access network device, wherein the second TA is a TA that is last reported between the terminal device and the access network device or a TA that is last used by the terminal device.

3. The method according to claim 1 or 2, wherein the method further comprises:
receiving, by the terminal device, a second message sent by the access network device, wherein the second message indicates the terminal device to enable a function of sending the first message to the access network device.

4. The method according to any one of claims 1 to 3, wherein the sending, by the terminal device, a first message to the access network device comprises:
when first physical uplink shared channel PUSCH resource is available for the terminal device, sending, by the terminal device, the first message to the access network device by using the first PUSCH resource; or
when first physical uplink shared channel PUSCH resource is not available for the terminal device, triggering, by the terminal device, a scheduling request SR, and sending the SR to request, from the access network device, a second PUSCH resource used to send the first message to the access network device.

5. The method according to claim 4, wherein an SR resource used by the SR is a universal SR resource.

6. The method according to claim 4 or 5, wherein the sending, by the terminal device, a first message to the access network device comprises:
when an uplink synchronous timer TAT of the terminal device is in a timeout state, sending, by the terminal device, the first message to the access network device by using the first PUSCH resource or the second PUSCH resource.

7. The method according to any one of claims 1 to 6, wherein the method further comprises:
after the terminal device sends the first message, if the terminal device does not receive an acknowledgment message for the first message from the access network device in a first preset time, resending, by the terminal device, the first message or setting the uplink synchronous timer TAT to the timeout state.

8. The method according to any one of claims 1 to 7, wherein the method further comprises:
performing, by the terminal device, a preset operation after a second preset time since the uplink synchronous timer TAT of the terminal device enters the timeout state, wherein the preset operation comprises one or more of clearing a hybrid automatic repeat request HARQ buffer of the terminal device, releasing a physical uplink control channel PUCCH resource of the terminal device, releasing a sounding reference signal SRS resource of the terminal device, clearing a configured grant of the terminal device, clearing a PUSCH resource that is of the terminal device and that is used to report semi-persistent CSI, and maintaining a TA parameter.

9. The method according to any one of claims 1 to 8, wherein the method further comprises:
after the terminal device sends the first message, starting or restarting, by the terminal device, the uplink synchronous timer TAT; or
starting or restarting, by the terminal device, the uplink synchronous timer TAT after a third preset time since the terminal device sends the first message.

10. An uplink synchronization adjustment method, comprising:
receiving, by an access network device, a first message sent by a terminal device, wherein the first message comprises a first timing advance TA, and the first TA is used to perform uplink synchronization between the terminal device and the access network device; and
communicating with, by the access network device, the terminal device based on the first TA.

11. The method according to claim 10, wherein the method further comprises:
sending, by the access network device, a second message to the terminal device, wherein the second message indicates the terminal device to enable a function of sending the first message to the access network device.

12. The method according to claim 10 or 11, wherein the receiving, by an access network device, a first message sent by a terminal device comprises:
when first physical uplink shared channel PUSCH resource is available for the terminal device, receiving, by the access network device, the first message sent by the terminal device by using the first PUSCH resource; or
when first physical uplink shared channel PUSCH resource is not available for the terminal device, receiving, by the access network device, a scheduling request SR sent by the terminal device, allocating a second PUSCH resource to the terminal device, and receiving the first message sent by the terminal device by using the second PUSCH resource.

13. The method according to claim 12, wherein the receiving, by an access network device, a first message sent by a terminal device comprises:
when an uplink synchronous timer TAT of the access network device is in a timeout state, receiving, by the access network device, the first message sent by the terminal device by using the first PUSCH resource or the second PUSCH resource.

14. The method according to any one of claims 10 to 13, wherein the method further comprises:
sending, by the access network device, an acknowledgment message for the first message to the terminal device.

15. The method according to any one of claims 10 to 14, wherein the method further comprises:
performing, by the access network device, a preset operation after a fourth preset time since the uplink synchronous timer TAT of the access network device enters the timeout state, wherein the preset operation comprises one or more of clearing a currently configured hybrid automatic repeat request HARQ buffer, releasing a currently configured physical uplink control channel PUCCH resource, releasing a currently configured sounding reference signal SRS resource, clearing a currently configured grant, clearing a currently configured PUSCH resource, and maintaining a TA parameter.

16. The method according to any one of claims 10 to 15, wherein the method further comprises:
after the access network device receives the first message sent by the terminal device, starting or restarting, by the access network device, the uplink synchronous timer TAT; or
after the access network device receives the first message sent by the terminal device, starting or restarting, by the access network device, the uplink synchronous timer TAT, and reducing duration of the TAT by a fifth preset time.

17. A communication apparatus, comprising:
a determining unit, configured to determine a first timing advance TA, wherein the first TA is used to perform uplink synchronization between the communication apparatus and an access network device; and
a transceiver unit, configured to send a first message to the access network device, wherein the first message comprises the first TA.

18. The communication apparatus according to claim 17, wherein the transceiver unit is specifically configured to: when a difference between the first TA and a second TA is greater than or equal to a preset threshold, send the first message to the access network device, wherein the second TA is a TA that is last reported between the communication apparatus and the access network device or a TA that is last used by the communication apparatus.

19. The communication apparatus according to claim 17 or 18, wherein the transceiver unit is further configured to receive a second message sent by the access network device, wherein the second message indicates the communication apparatus to enable a function of sending the first message to the access network device.

20. The communication apparatus according to any one of claims 17 to 19, wherein the transceiver unit is specifically configured to: when first physical uplink shared channel PUSCH resource is available for the communication apparatus, send the first message to the access network device by using the first PUSCH resource; or
when first physical uplink shared channel PUSCH resource is not available for the communication apparatus, trigger a scheduling request SR, and send the SR to request, from the access network device, a second PUSCH resource used to send the first message to the access network device.

21. The communication apparatus according to claim 20, wherein an SR resource used by the SR is a universal SR resource.

22. The communication apparatus according to claim 20 or 21, wherein the transceiver unit is specifically configured to: when an uplink synchronous timer TAT of the communication apparatus is in a timeout state, send the first message to the access network device by using the first PUSCH resource or the second PUSCH resource.

23. The communication apparatus according to any one of claims 17 to 22, further comprising:
a first processing unit, configured to: after the communication apparatus sends the first message, if the communication apparatus does not receive an acknowledgment message for the first message from the access network device in a first preset time, resend the first message or set the uplink synchronous timer TAT to the timeout state.

24. The communication apparatus according to any one of claims 17 to 23, further comprising:
a second processing unit, configured to perform a preset operation after a second preset time since the uplink synchronous timer TAT of the communication apparatus enters the timeout state, wherein the preset operation comprises one or more of clearing a hybrid automatic repeat request HARQ buffer of the communication apparatus, releasing a physical uplink control channel PUCCH resource of the communication apparatus, releasing a sounding reference signal SRS resource of the communication apparatus, clearing a configured grant of the communication apparatus, clearing a PUSCH resource that is of the communication apparatus and that is used to report semi-persistent CSI, and maintaining a TA parameter.

25. The communication apparatus according to any one of claims 17 to 24, further comprising:
a third processing unit, configured to: after the communication apparatus sends the first message, start or restart the uplink synchronous timer TAT; or after the communication apparatus sends the first message, start or restart the uplink synchronous timer TAT after a third preset time.

26. A communication apparatus, comprising:
a transceiver unit, configured to: receive a first message sent by a terminal device, wherein the first message comprises a first timing advance TA, and the first TA is used to perform uplink synchronization between the terminal device and the communication apparatus; and communicate with the terminal device based on the first TA.

27. The communication apparatus according to claim 26, wherein the transceiver unit is further configured to send a second message to the terminal device, wherein the second message indicates the terminal device to enable a function of sending the first message to the communication apparatus.

28. The communication apparatus according to claim 26 or 27, wherein the transceiver unit is specifically configured to:
when first physical uplink shared channel PUSCH resource is available for the terminal device, receive the first message sent by the terminal device by using the first PUSCH resource; or
when first physical uplink shared channel PUSCH resource is not available for the terminal device, receive a scheduling request SR sent by the terminal device, allocate a second PUSCH resource to the terminal device, and receive the first message sent by the terminal device by using the second PUSCH resource.

29. The communication apparatus according to claim 28, wherein the transceiver unit is specifically configured to: when an uplink synchronous timer TAT of the communication apparatus is in a timeout state, receive the first message sent by the terminal device by using the first PUSCH resource or the second PUSCH resource.

30. The communication apparatus according to any one of claims 26 to 29, wherein the transceiver unit is further configured to send an acknowledgment message for the first message to the terminal device.

31. The communication apparatus according to any one of claims 26 to 30, further comprising:
a first processing unit, configured to perform a preset operation after a fourth preset time since the uplink synchronous timer TAT of the communication apparatus enters the timeout state, wherein the preset operation comprises one or more of clearing a currently configured hybrid automatic repeat request HARQ buffer, releasing a currently configured physical uplink control channel PUCCH resource, releasing a currently configured sounding reference signal SRS resource, clearing a currently configured grant, clearing a currently configured PUSCH resource, and maintaining a TA parameter.

32. The communication apparatus according to any one of claims 26 to 31, further comprising:
a second processing unit, configured to: after the communication apparatus receives the first message sent by the terminal device, start or restart the uplink synchronous timer TAT; or after the communication apparatus receives the first message sent by the terminal device, start or restart the uplink synchronous timer TAT, and reduce duration of the TAT by a fifth preset time.

33. A communication apparatus, comprising a processor and a memory, wherein the memory is configured to store program code, and when the program code is executed by the processor, the communication apparatus implements the method according to any one of claims 1 to 16.

34. A communication system, comprising one or more terminal devices and one or more access network devices, wherein the one or more terminal devices are communicatively connected to the one or more access network devices, the one or more terminal devices perform the method according to any one of claims 1 to 9, and the one or more access network devices perform the method according to any one of claims 10 to 16.

35. A computer-readable storage medium, comprising instructions, wherein when the instructions are run on a computer, the computer is enabled to perform the method according to any one of claims 1 to 16.

36. A chip system, wherein the chip system comprises a processor, configured to support a device in implementing a function according to any one of claims 1 to 16.

37. A computer program product, wherein the computer program product comprises instructions, and when the computer program product is executed by a computer, the computer is enabled to perform the method according to any one of claims 1 to 16.
